(19) Europäisches Patentamt
European Patent Office
Office européen des brevets

(11) Publication number: 0 492 662 A2

# (12) EUROPEAN PATENT APPLICATION

(21) Application number: **91122322.0**

(51) Int. Cl.$^5$: **C08G 77/08**

(22) Date of filing: **27.12.91**

(30) Priority: **27.12.90 JP 416681/90**

(43) Date of publication of application: **01.07.92 Bulletin 92/27**

(84) Designated Contracting States: **DE FR GB**

(71) Applicant: **Dow Corning Toray Silicone Company, Limited**
**Mitsui Bldg. No. 6, 2-3-16,**
**Nihonbashi-Muromachi, Chuo-Ku**
**Tokyo 103(JP)**

(72) Inventor: **Yamamoto, Yokichi**
**1065-115, Soja**
**Ichihara-shi, Chiba Prefecture(JP)**
Inventor: **Yamashita, Mitsugu**
**1423-1, Aoyagi**
**Ichihara-shi, Chiba Prefecture(JP)**

(74) Representative: **Spott, Gottfried, Dr.**
**Spott Weinmiller & Partner**
**Sendlinger-Tor-Platz 11**
**W-8000 München 2(DE)**

## (54) Method for preparing organopolysiloxanes.

(57) Highly thermally stable, highly transparent straight-chain organopolysiloxanes are described which are prepared according to a method for the preparation of straight-chain organopolysiloxanes by the polymerization of low-molecular-weight organopolysiloxane cyclics in the presence of a tetramethylammonium hydroxide-type catalyst. The method for the preparation of straight-chain organopolysiloxanes is characterized by the use of a tetramethylammonium hydroxide-type catalyst which contains no more than 0.005 weight% of chlorine atom and no more than 0.0005 weight% of alkali metal atom.

EP 0 492 662 A2

The present invention relates to a method for the preparation of straight-chain organopolysiloxanes.

Straight-chain organopolysiloxanes offer an excellent heat resistance and cold resistance and have been used in a variety of applications in the form of silicone oils, and silicone rubbers. Straight-chain organopolysiloxanes are prepared by the polymerization of one or more species of low-molecular-weight organopolysiloxane cyclics in the presence of an acid catalyst such as hydrochloric acid, sulfuric acid, and sulfonic acid or an alkali catalyst such as sodium hydroxide, potassium hydroxide, and tetramethylammonium hydroxide. The polymerization reaction is followed by the neutralization or removal of the polymerization catalyst.

Among the aforesaid polymerization catalysts, the tetramethylammonium hydroxide catalyst offers certain advantages as a polymerization catalyst. Thus, when heated to high temperatures it thermally decomposes according to the reaction equation:

$$(CH_3)_4NOH \rightarrow (CH_3)_3N + CH_3OH$$

and is converted into low-boiling compounds which can be easily removed from the polymer by a vacuum process. This avoids any requirement for catalyst neutralization as noted in Japanese Patent Publication Number 46-21602/71 and Journal of Polymer Science, Volume 40, pages 35-58, 1959. However, polymerization based on such prior tetramethylammonium hydroxide polymerization catalysts produces straight-chain organopolysiloxanes which evidence an inferior heat resistance and an inferior transparency.

The present inventors have discovered that the chlorine and alkali metal atoms present as impurities in the tetramethylammonium hydroxide catalyst are the cause of the deterioration in the heat resistance of the organopolysiloxane product. It has been discovered that the problems can be solved through the use of a tetramethylammonium hydroxide-type catalyst whose content of chlorine and alkali metal has been controlled or adjusted to within specific levels.

Thus, the present invention has as its object the introduction of a highly productive method for the preparation of a straight-chain organopolysiloxane which has an excellent heat resistance and excellent transparency.

With regard to the preparation of a straight-chain organopolysiloxane by the polymerization of low-molecular-weight organopolysiloxane cyclics in the presence of a tetramethylammonium hydroxide-type catalyst, the is achieved by the use of a tetramethylammonium hydroxide-type catalyst which contains no more than 0.005 weight% of chlorine atom and no more than 0.0005 weight% of alkali metal atom.

The low-molecular-weight organopolysiloxane cyclics employed as the starting material by the present invention comprise organopolysiloxanes with the general formula:

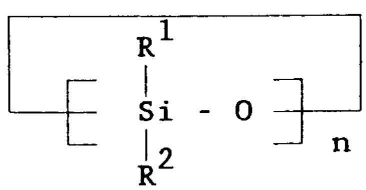

wherein n is a positive integer with a value of 3 to 8; and $R^1$ and $R^2$ are substituted and unsubstituted monovalent hydrocarbon groups such as the alkyl groups methyl, ethyl, and propyl; alkenyl groups such as vinyl, allyl, propenyl, and hexenyl; aryl groups such as phenyl and xylyl; and groups afforded by the partial replacement of hydrogen in the preceding groups with halogen, mercapto, and methacryloxy. These low-molecular-weight organopolysiloxane cyclics constitute the starting material for the present invention, and this starting material may comprise only a single species or a mixture of different species of low-molecular-weight organopolysiloxane cyclics. In addition, other copolymerizable or reactive straight-chain siloxane oligomers known in the art may also be present in the polymerization system. The particular starting material used may be selected according to the application intended for the final straight-chain organopolysiloxane product.

The tetramethylammonium hydroxide-type catalyst employed by the present invention is the component which characterizes or distinguishes the present invention. This component acts to open the ring in the aforesaid low-molecular-weight organopolysiloxane cyclics and accelerates the polymerization reaction with the ultimate production of a transparent, highly heat-resistant organopolysiloxane. The tetramethylammonium hydroxide-type catalyst is a catalyst whose principal component is tetramethylammonium hydroxide ( $(CH_3)_4NOH$ ) or a derivative thereof. The chlorine content in this composition should not exceed 0.005

weight% and preferably does not exceed 0.0025 weight%, and the alkali metal content in this composition should not exceed 0.0005 weight% and preferably does not exceed 0.00025 weight%. This tetramethylammonium hydroxide-type catalyst may be prepared by an electrolytic method in which an aqueous solution of tetramethylammonium chloride shown as

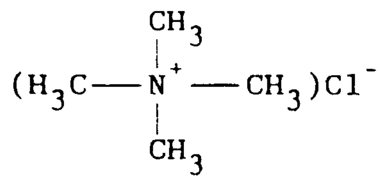

is treated with an alkali metal hydroxide such as sodium hydroxide and is then supplied to the anode compartment of an electrolytic cell which is divided into anode and cathode compartments by a fluorocarbon cation-exchange membrane. Electrolysis is then conducted while supplying water to the cathode compartment and aqueous tetramethylammonium hydroxide solution is subsequently taken off from the cathode compartment as noted in Japanese Patent Application Laid Open Number 61-190085/86.

The present invention may employ aqueous tetramethylammonium hydroxide solutions produced by the above-described electrolytic method which already have a chlorine content not exceeding 0.005 weight% and an alkali metal content not exceeding 0.0005 weight%. Moreover, the aqueous tetramethylammonium hydroxide solution afforded by this method may be additionally purified using various types of ion-exchange resins in order to remove the chlorine and alkali metal present in the aqueous solution.

The levels of chlorine and alkali metal present in the tetramethylammonium hydroxide-type catalyst employed in the present invention can be determined by known analytic methods for the determination of chloride and alkali metal ion. For example, the chlorine level can be readily determined by dissolving the tetramethylammonium hydroxide-type catalyst in a methanol/acetone mixture and titrating potentiometrically under acidic conditions produced with nitric acid. The alkali metal content is determined by known atomic absorption spectrometric techniques. The present invention employs a catalyst whose principal component is a high-purity tetramethylammonium hydroxide as specified hereinbefore, but may also employ a catalyst composition whose principal component is a derivative of the tetramethylammonium hydroxide. Such a catalyst composition is exemplified by a catalyst whose principal component is a tetramethylammonium silanolate provided by the reaction of tetramethylammonium hydroxide and an organopolysiloxane.

The method according to the present invention consists of the polymerization of low-molecular-weight organopolysiloxane cyclics as specified hereinbefore in the presence of the high-purity tetramethylammonium hydroxide-type catalyst as specified hereinbefore. The polymerization temperature preferably falls within the range of 60 to 120 °C. The reaction pressure is not restricted, and ambient pressure is satisfactory. The tetramethylammonium hydroxide-type catalyst is typically employed at 0.5 to 500 ppm by weight based on the low-molecular-weight organopolysiloxane cyclic.

In a preferred embodiment of the preparative method according to the present invention, the residual tetramethylammonium hydroxide-type catalyst is removed from the straight-chain organopolysiloxane produced as described above. At the time of termination of the polymerization, the polymer is heated to a temperature at or above the decomposition temperature of the tetramethylammonium hydroxide-type catalyst in order to decompose the catalyst into low-boiling compounds, which are then removed from the polymer in a vacuum process.

The straight-chain organopolysiloxane produced by the method according to the present invention as described hereinbefore has a much better heat resistance than the high-molecular-weight straight-chain organopolysiloxanes afforded by methods heretofore known in the art, and is particularly superior in this regard to the high-molecular-weight straight-chain organopolysiloxanes afforded by methods which employ low-purity tetramethylammonium hydroxide as used heretofore. In addition, the straight-chain organopolysiloxanes produced by the present method has an excellent transparency. As a consequence, it can be used in various applications where these properties are critical.

The present invention will be explained in detail below in the examples and reference examples. In the examples, the viscosity is the value measured at 25 °C and cst is centistokes. To determine chlorine, the tetramethylammonium hydroxide-type catalyst was dissolved in methanol/acetone (1 : 1 W/W) and then titrated potentiometrically under acidic conditions with nitric acid. The alkali metal was directly determined by atomic absorption spectrometry.

Reference Example 1

Preparation of aqueous tetramethylammonium hydroxide solution catalysts

Tetramethylammonium hydroxide-type catalysts were prepared in the form of four aqueous tetramethylammonium hydroxide solution catalysts having different chlorine and sodium contents as shown in Table 1 below.

Table 1

| | Catalyst | | | |
|---|---|---|---|---|
| | A | B | C | D |
| tetramethylammonium hydroxide concentration wt.% | 28 | 27 | 27 | 28 |
| chlorine content wt.% | 0.0002 | 0.0018 | 0.0021 | 0.1200 |
| sodium content wt.% | 0.00005 | 0.0001 | 0.0008 | 1.0900 |
| preparative method | 1 | 2 | 3 | 4 |

1: Prepared in accordance with the ectrolytic method described in Japanese Patent Application Laid Open Nmber 61-190085. Aqueous tetramethylammonium chloride was supplied to the anode compartment of an electrolytic cell which was divided into anode and cathode compartments by fluorocarbonsulfonic acid (Nafion 427 from Du Pont). Electrolysis was conducted while supplying water to the cathode compartment, and aqueous tetramethylammonium hydroxide solution was then taken off from the cathode compartment.

2: A column of strongly basic ion-exchange resin was regenerated with aqueous sodium hydroxide and then washed with water (1000-fold water based on the ion-exchange resin). Then, after this washing, aqueous tetramethylammonium chloride was passed through the column.

3: A column of strongly basic ion-exchange resin was regenerated with aqueous sodium hydroxide and then washed with water (10-fold water based on the ion-exchange resin). Then, after this washing, aqueous tetramethylammonium chloride was passed through the column.

4: One mole of tetramethylammonium chloride was reacted with 1 mole of sodium hydroxide in isopropyl alcohol and the precipitate was filtered off. The filtrate was dried in vacuo, and the product was dissolved in water.

Reference Example 2

Preparation of tetramethylammonium siliconate catalysts

Tetramethylammonium hydroxide-type catalysts were prepared in the form of four tetramethylammonium siliconate catalysts having different chlorine and sodium contents as shown in Table 2 below.

Table 2

| | Catalyst | | | |
|---|---|---|---|---|
| | E | F | G | H |
| tetramethylammonium siliconate concentration wt.% | 3.9 | 3.8 | 3.8 | 3.9 |
| chlorine content wt.% | 0.0001 | 0.0005 | 0.0005 | 0.020 |
| sodium content wt.% | 0.00002 | 0.00002 | 0.00018 | 0.19 |
| preparative method | 1 | 2 | 3 | 4 |

1: 200 grams of aqueous tetramethylammonium hydroxide solution catalyst A as prepared in Reference Example 1 and 1,000 g dimethylvinylsiloxy-terminated dimethylpolysiloxane having a viscosity of 1,000 cst at 25 ° C were placed in a three-neck flask equipped with a stirrer, condenser, and thermometer. This system was reacted for 2 hours by heating to 90 ° C with stirring while distilling the water from the reaction system in vacuo. Analysis confirmed that the principal component in the reaction product was tetramethylammonium dimethylsiliconate.

2: The preparative method in 1 above was repeated, but using the aqueous tetramethylammonium hydroxide solution catalyst B as prepared in Reference Example 1 in place of the aqueous tetramethylammonium hydroxide solution catalyst A used in the method in 1.

3: The preparative method in 1 was repeated, but using the aqueous tetramethylammonium hydroxide solution catalyst C as prepared in Reference Example 1 in place of the aqueous tetramethylammonium hydroxide solution catalyst A used in the method in 1.

4: The preparative method in 1 above was repeated, but using the aqueous tetramethylammonium hydroxide solution catalyst D as prepared in Reference Example 1 in place of the aqueous tetramethylammonium hydroxide solution catalyst A used in the method in 1.

Example 1

999 grams of octamethylcyclotetrasiloxane and one gram of hexamethyldisiloxane were placed in an autoclave equipped with a stirrer, reflux condenser, and water separator and were mixed. This was followed by the addition of 0.10 grams of aqueous tetramethylammonium hydroxide solution catalyst A as prepared in Reference Example 1; reaction for 3 hours at 90 ° C/100 torr; and heating to a liquid temperature of 250 ° C and distillation in vacuo of the low-boiling components from the reaction system. After cooling, the appearance, viscosity, and nonvolatile content of the straight-chain dimethylpolysiloxane product was evaluated, and these results are shown in Table 3.

A second straight-chain dimethylpolysiloxane polymerization was conducted as above, but using the aqueous tetramethylammonium hydroxide solution catalyst B as prepared in Reference Example 1 in place of the aqueous tetramethylammonium hydroxide solution catalyst A employed above. Its appearance, viscosity, and nonvolatile fraction were also evaluated.

The percentage change in the viscosity of the dimethylpolysiloxanes during heating was measured. To measure, 100 cc dimethylpolysiloxane was collected in a 200 mL glass syringe which was held in a 200 ° C oven for the specified period of time. These measurement results are shown in Table 3.

The percentage change in the viscosity was calculated where $eta_1$ is the viscosity of the dimethylpolysiloxane prior to heating and $eta_2$ is the viscosity of the dimethylpolysiloxane after heating by the equation:

$$\text{viscosity change (\%)} = \frac{eta_2 - eta_1}{eta_1} \times 100 .$$

For comparison, dimethylpolysiloxane polymerizations were conducted as above, but using the aqueous tetramethylammonium hydroxide solution catalysts C and D as prepared in Reference Example 1 in place of the aqueous tetramethylammonium hydroxide solution catalyst A employed above. The properties of these straight-chain dimethylpolysiloxane products were evaluated as above, and these results are shown in Table 3.

Table 3

| | Present Invention | | Comparison Examples | |
|---|---|---|---|---|
| | Catalyst | | | |
| | A | B | C | D |
| appearance | trans-parent | trans-parent | white turbidity | white turbidity |
| viscosity, cst. | 1002 | 998 | 1015 | 995 |
| nonvolatile fraction 150°C, 3 hours wt.% | 0.2 | 0.2 | 0.2 | 0.2 |
| viscosity change (%) | | | | |
| after heating 24 hours | -1.0 | -2.0 | -19.5 | -62.0 |
| after heating 48 hours | -2.5 | -4.0 | -41.2 | -64.0 |
| after heating 96 hours | -5.0 | -5.4 | -61.8 | -64.2 |

These result confirm that the straight-chain dimethylpolysiloxanes produced in accordance with the present invention were transparent and far more thermostable than the products of the comparison examples.

Example 2

There was introduced into an autoclave equipped with a stirrer, reflux condenser, and water separator and polymerized for 3 hours at 90 ° C with stirring: 975 grams of octamethylcyclotetrasiloxane, 25 grams of tetramethyldivinyldisiloxane and dimethylvinylsiloxy-terminated dimethylsiloxane oligomer end-blocking agent, and 2.0 grams of tetramethylammonium siliconate catalyst E as prepared in Reference Example 2. The reaction mixture was heated to 165 ° C and the low-boiling components were distilled off by distillation in vacuo. After cooling, the appearance, viscosity, vinyl group content, and volatile fraction of the dimethylvinylsiloxy-terminated dimethylpolysiloxane product were measured, and these results are shown in Table 4.

Additional polymerizations to provide dimethylvinylsiloxy-terminated dimethylpolysiloxanes were conducted as above, but using the tetramethylammonium siliconate catalysts F, G, and H as prepared in Reference Example 2 in place of the tetramethylammonium siliconate catalyst E. The properties of the products were evaluated as above, and these results are shown in Table 4.

Table 4

| | Present Invention | | Comparison Examples | |
|---|---|---|---|---|
| | Catalyst | | | |
| | E | F | G | H |
| appearance | trans-parent | trans-parent | slight turbidity | slight turbidity |
| viscosity cst. | 2000 | 1990 | 1980 | 2010 |
| nonvolatile fraction 150°C, 3 hours wt.% | 0.5 | 0.5 | 0.45 | 0.5 |
| vinyl group content wt/% | 0.23 | 0.2 | 6.23 | 0.2 |

Because the method according to the presen invention employs a tetramethylammonium hydroxide-type catalyst which contains no more than 0.005 weight% of chlorine and no more than 0.0005 weight% of alkali metal for the preparation of straight-chain organopolysiloxanes by the polymerization of low-molecular-weight organopolysiloxane cyclics in the presence of a tetramethylammonium hydroxide-type catalyst, it is characterized by the highly productive manufacture of a strongly heat-resistant, very transparent straight-chain organopolysiloxane.

It will be apparent from the foregoing that many other variations and modifications may be made in the compounds, compositions, structures, and methods described herein without departing substantially from the essential features and concepts of the present invention. Accordingly, it should be clearly understood that the forms of the invention described herein are exemplary only and are not intended as limitations on the scope of the present invention as defined in the appended claims.

## Claims

1. In a method of preparing linear organopolysiloxanes in which a cyclic organopolysiloxane is polymerized in the presence of a catalyst, the improvement comprising utilizing as the polymerization catalyst tetramethylammonium hydroxide or a tetramethylammonium hydroxide siliconate derivative thereof, the tetramethylammonium hydroxide polymerization catalyst including 0.005 percent by weight or less of chlorine atom and 0.0005 percent by weight or less of alkali metal atom.

2. A method according to Claim 1 in which the catalyst is in the form of an aqueous solution.

3. A method according to Claim 1 in which the siliconate derivative is the reaction product of tetramethylammonium hydroxide and an organopolysiloxane.

4. A method according to Claim 3 in which the siliconate derivative is the reaction product of tetramethylammonium hydroxide and a vinylfunctional organopolysiloxane.

5. A method according to Claim 1 in which the catalyst includes 0.0025 percent by weight or less of chlorine atom and 0.00025 percent by weight or less of alkali metal atom.